# EUROPÄISCHE PATENTANMELDUNG

(11) **EP 2 535 840 A1**
(43) Veröffentlichungstag der Anmeldung: **19.12.2012**
(21) Anmeldenummer: 11170249.4
(22) Anmeldetag: 16.06.2011
(51) Int. Cl.: G06K 7/08, G06K 19/077

(54) **Mittel zur unidirektionalen oder bidirektionalen Datenübertragung**

(71) Anmelder: Printechnologics GmbH, 09112 Chemnitz (DE)
(72) Erfinder: Kreutzer, André, 09648 Mittweida (DE); Hofmann, Sven, 04279 Leipzig (DE)
(74) Vertreter: Lange, Sven

(57) **Zusammenfassung**

Es wird mithin ein System beschrieben, das einen Berührungsbildschirm und eine Sende-und/oder Empfangsvorrichtung beinhaltet, wobei zwischen dem Berührungsbildschirm und der Vorrichtung ein Wirkkontakt besteht und mittels der Sende- und/oder Empfangsvorrichtung Daten an den Berührungsbildschirm gesendet oder von diesem empfangen werden.

## Beschreibung

Die Erfindung betrifft ein System zur Übertragung von Daten zwischen einem, einen Berührungsbildschirm aufweisendes Gerät und einer Sende- und/oder Empfangsvorrichtung. Weiterhin betrifft die Erfindung die Verwendung des Systems und ein Verfahren zur Datenübertragung.

Im digitalen Zeitalter wird das Smartphone oder ein sonstiges tragbares elektronisches Gerät zum ständigen Begleiter, dem zunehmend weitere Aufgaben neben den ursprünglichen auferlegt werden. Eine wesentliche Aufgabe der Geräte ist die Verwaltung von Daten, wie beispielsweise Kontaktdaten, Zugangsdaten, Notizen, aber auch finanzwirtschaftlichen Daten, die beispielsweise die mobile Verwaltung des Bankkontos erlauben. Auch die Verwendung des Gerätes zum Einkauf von Waren oder Dienstleistungen ist möglich.

Somit ist es nötig, für diese digitalen Begleiter eine Vorrichtung bereitzustellen, welche eine Kommunikation mit den Geräten ermöglicht und einen sicheren, schnellen und komplexen Datentaustausch mit dem elektrischen Gerät erreicht. Datenaustausch ist ein Begriff aus der elektronischen Datenverarbeitung und bezeichnet insbesondere die Übertragung von Daten zwischen elektrischen Geräten, wie beispielsweise Computern, Systemkomponenten oder Programmen.

Im Stand der Technik ist die sogenannte "Near Field Communication" (NFC) beschrieben, die einen genormten Standard zur Übertragung von Daten im Nahbereich, also über eine kurze Distanz von wenigen Zentimetern, darstellt. Die Übertragung erfolgt dabei nicht mit Kabeln, sondern drahtlos.

Datenübertragungen via NFC sind meistens intuitiv, das bedeutet, ein NFC-fähiges Gerät wie z.B. ein NFC-Handy wird einfach nahe an ein anderes NFC-Gerät oder einen Datenträger (z.B. einen sogenannter NFC-Tag) gehalten, auf dem Informationen hinterlegt sind. Daraufhin startet die Datenübertragung und ggf. die damit zusammenhängende Applikation automatisch und/oder nach einer kurzen Bestätigung mittels Tastendruck.

Dabei kann eine maximale Übertragungsgeschwindigkeit von 424 kB/s erreicht werden. Die Datenübertragung erfolgt mittels NFC und damit zwar langsamer als bei verwandten Techniken wie Bluetooth oder WLAN, dafür bietet sie aber auch entscheidende Vorteile beim Thema Sicherheit. Dies macht NFC zur Basis für bargeldlose Bezahlsysteme oder Zugangskontrollen.

Die Übertragung der Daten kann sowohl uni- als auch bidirektional erfolgen, verbundene Geräte können also in beide Richtungen Daten austauschen und damit einen Dialog führen. Die NFC-Technik ermöglicht es zum Beispiel, Transaktionen verschiedener Art auszuführen, digitale Inhalte auszutauschen oder elektronische Geräte miteinander zu verbinden.

Grundsätzlich unterscheidet man drei verschiedene Modi zur NFC-Datenübertragung:
● Auslesen von auf einem passiven Speicher hinterlegten Informationen durch ein NFC-Gerät. Z.B. Übertragung eines Konzerttermins von einem auf einem Plakat angebrachten NFC-Tags zur Speicherung und Erinnerung auf ein NFC-Handy.
● Auslesen von Informationen von einem NFC-Endgerät durch ein aktives NFC-Medium. Zum Beispiel das Auslesen des auf einem NFC-Handy hinterlegten elektronischen Konzerttickets durch ein NFC-Terminal im Eingangsbereich.
● Bidirektionaler Austausch von Daten zwischen zwei NFC-Geräten im Dialog.

Weiterhin sind aus dem Stand der Technik verschiedene Verfahren zum Schutz gegen Manipulationen von Transaktionen bekannt. Bei der elektronischen Durchführung von bankgeschäftlichen Transaktionen kommt insbesondere die Verwendung des PIN/TAN-Verfahrens in verschiedenen Ausprägungen zum Einsatz. Dabei loggt sich ein Benutzer über eine PIN mittels seines Browsers auf dem Bank-Server seiner Bank ein und gibt über eine entsprechende Datenverbindung, welche vorzugsweise kryptographisch gesichert ist, die Transaktionsdaten der durchzuführenden Transaktion ein.

In der Druckschrift WO 2008/046575 A1 ist ein Verfahren zur Durchführung einer Applikation mit Hilfe eines tragbaren Datenträgers beschrieben, bei dem die Applikation mit Hilfe eines ersten und zweiten Endgeräts unter Zwischenschaltung des Datenträgers durchgeführt wird. Das Verfahren kann insbesondere auch zur Ausführung von elektronischen Banktransaktionen eingesetzt werden. Die dabei durchgeführte Kommunikation findet immer unter Zwischenschaltung des tragbaren Datenträgers statt. In dem Verfahren werden Transaktionsdaten zunächst über das erste Endgerät eingegeben, wobei das erste Endgerät insbesondere ein Personal-Computer ist. Daraufhin werden die Daten an den tragbaren Datenträger übermittelt, der diese an ein zweites Endgerät, z. B. an ein Mobiltelefon, weiterleitet. Die Transaktion muss dann durch einen Benutzer mittels einer Eingabe an dem zweiten Endgerät freigegeben werden, woraufhin die Transaktionsdaten von dem Datenträger an einen Server übertragen werden, der die Transaktion ausführt. [0008] In der Druckschrift US 2003/0087601 A1 ist die Verwendung eines Sicherheits-Tokens mit zwei Schnittstellen zur gesicherten Datenübertragung zwischen einem Mobiltelefon und einem PC beschrieben. Der Token kommuniziert dabei über eine kontaktlose Schnittstelle, beispielsweise basierend auf Bluetooth oder Infrarot mit dem Mobiltelefon und über eine kontaktgebundene Schnittstelle mit dem PC.

Ferner ist im Stand der Technik offenbart, dass portable Datenträger mit einem Chip ausgestattet werden können und auf diesem datenträger- oder personenindividuellen Daten speicherbar sind. Jedoch ist das Einschreiben der Daten nur über eine geeignete Datenkommunikationsverbindung von einer außerhalb des Datenträgers befindlichen Schreibeinrichtung zu dem eingebetteten Chip möglich. In diesem Zusammenhang ist es bekannt, an der Außenseite von portablen Datenträgern Kontaktflächen bereitzustellen, über die datenträger- oder personenindividuelle Daten (z. B. Personalisierungsdaten) in den Chip des Datenträgers eingeschrieben werden können. Derartige datenträgerindividuelle oder Personalisierungsdaten betreffen individualisierende Daten einer Person oder einer Datenträgerkonfiguration oder dergleichen, die nicht bereits bei der Initialisierung des Datenträgers eingespielt werden können, da sie insbesondere keine für eine Vielzahl von Datenträgern geeigneten datenträger- und/oder personenunabhängige Daten sind. Dazu werden die datenträger- oder personenindividuellen Daten über ein Kontaktfeld des Datenträgers in den vollständig in ein Kunststoffsubstrat eingebetteten (bereits initialisierten) Chip eingeschrieben.

Derartige Kontaktfelder sind optisch auffällig und schaffen über die gesamte Lebensdauer des Datenträgers einen prinzipiellen Zugang zu den sensiblen Daten im Chip, der für Manipulationen und Ausspähungen ausgenutzt werden könnte. Darüber hinaus reduzieren sie die Lebensdauer des Chips, da äußere Einflüsse, wie z. B. Spannungen, direkt in den Chip gelangen können. Ebenso ergibt sich die Schwierigkeit, dass derartige elektronisch personalisierte, d. h. mit Personalisierungsdaten versehene Datenträger nachfolgend nicht ohne weiteres einer optischen Personalisierung - d. h. einer sichtbaren, individualisierenden Beschriftung oder Prägung - zugeordnet werden können, da die in den Chip eingeschriebenen Personalisierungsdaten bei der optischen Personalisierung nur schwer ausgelesen werden können.

Beispielsweise offenbart die DE 195 00 925 A1 eine Chipkarte zur kontaktlosen Datenübertragung, die jedoch an einer ihrer Außenseiten mit Kontaktflächen versehen ist, sodass auch hier die oben genannten Nachteile im Zusammenhang mit der Personalisierung auftreten.

Im Stand der Technik sind zahlreiche elektronische Geräte beschrieben, die einen berührungsempfindlichen Bildschirm (Berührungsbildschirm) aufweisen, der auch als Touchscreen bezeichnet wird und mit Fingern oder Eingabegeräten bedienbar ist. Touchscreens befinden sich heutzutage beinahe in allen Lebensbereichen. Durch ihre intuitive Bedienung erleichtern sie gerade dem unerfahrenen Benutzer das leichte Bedienen von technischen Geräten in der Alltagswelt und können zur Bedienung eines elektronischen Gerätes verwendet werden. Das heißt, sie finden sowohl im Alltag als auch in der Industrie Anwendung, in der Touchscreens zum Beispiel zur Steuerung von Maschinen Verwendung finden oder im Bereich der Spieleindustrie, wo sie für Spielautomaten oder Arcade-Games eingesetzt werden. Weitere Beispiele für Berührungsbildschirme umfassen Smartphones, Handys, Displays, Tablet-PCs, Tablet-Notebooks, Touchpad-Geräte, Grafiktabletts, Fernseher, PDAs, MP3-Player, und/oder sonstige Eingabegeräte.

Ein Berührungsbildschirm kann auch Bestandteil von Eingabegeräten sein. Derartige Eingabegeräte werden unter anderem in Smartphones, PDAs, Touchdisplays oder Notebooks eingesetzt.

Allgemein versteht man unter einem Berührungsbildschirm, auch Tastschirm oder Sensorbildschirm genannt, eine auf dem Bildschirm angebrachte berührungssensitive Schicht, welche auf Kontakt des Benutzers mit seinem Finger oder einem je nach verwendeter Technologie geeigneten Zeigegriffel reagiert. Der Berührungsbildschirm ist ein Eingabegerät mit direkter Wirkung, das heißt die Eingabe erfolgt direkt auf dem angezeigten Raum, nicht abseits der Anzeige, wie dies beispielsweise bei Maus oder Tastatur der Fall wäre. Zudem erfolgt die Positionierung beim Touchscreen absolut, das heißt sie ist nicht abhängig von der vorhergehenden Position. Folglich bieten Touchscreens eine äußerst intuitive Bedienung, da der Bildschirm zugleich als Benutzeroberfläche dient und nicht der Umweg über externe Eingabegeräte gewählt werden muss.

Die Touchscreens basieren auf unterschiedlichen Wirkungsprinzipien, wobei die resistive und kapazitive Technologie am weitesten verbreitet sind. Resistive Touchscreens bestehen aus zwei sich gegenüberliegenden, transparenten, leitfähigen ITO-Schichten (Indiumzinnoxid), welche durch zahlreiche isolierte Abstandshalter, sogenannte "Spacer-Dots" voneinander getrennt sind. Die innere ITO-Schicht befindet sich auf einem festen Glasbildschirm, die äußere Schicht wird von einer flexiblen, kratzfesten Kunststofffolie geschützt. Mittels eines Steuergerätes wird an den leitenden Schichten Spannung angelegt, sodass auf der inneren Schicht ein Spannungsgradient in X-Richtung erzeugt wird, auf der äußeren Schicht ein Spannungsgradient in Y-Richtung. Sobald der Bildschirm berührt wird, wird die obere Schicht auf die darunter liegende gedrückt, somit ein elektrischer Kontakt hergestellt und damit die Spannung an dieser Stelle verändert. Der sogenannte Controller berechnet anschließend entsprechend der anliegenden Spannung die X-Y-Koordinate des berührten Punktes.

Dahingegen wird bei der kapazitiven Technologie beispielsweise auf zwei räumlich voneinander getrennten Ebenen wie z.B. der Ober- und Unterseite einer Folie oder eines Glassubstrates jeweils eine Vielzahl von parallel zueinander verlaufenden Leiterbahnen aus leitfähigem Metall-Oxid aufgetragen. An den Kreuzungspunkten der horizontal verlaufenden Leiterbahnen der einen Ebene und den vertikal verlaufenden Leiterbahnen der anderen Ebene bilden sich Kapazitäten aus. Die elektrische Ansteuerung der Leiterbahnen einer Ebene erzeugt somit ein messbares Signal auf den Leiterbahnen der zweiten Ebene. Durch Berührung des Systems erzeugt der Benutzer über seinen Finger und Körper eine kapazitive Verbindung zur Erde. Dadurch entsteht ein geringer Ladungstransport, welcher das Signal messbar beeinflusst. Der Controller wertet anschließend die resultierenden Signaländerungen aus und kann somit die exakten Koordinaten der Berührung bestimmen. Neben einem Single-Touch sind auch Multi-Touch Erkennungen möglich, sodass mehrere Finger oder Eingabeelemente ein Touchevent auslösen können.

Weiterhin sind noch Touchscreens bekannt, die eine Infrarot-Technologie, akustische Oberflächenwellen-Technologie oder dispersive Signal-Technologie verwenden.

Demnach ist es die Aufgabe der Erfindung, ein Mittel zur Verfügung zu stellen, welches nicht die Nachteile oder Mängel des Standes der Technik aufweist und eine sichere Datenübertragung mit einem mobilen Gerät ermöglicht.

Die Aufgabe der Erfindung wird durch die unabhängigen Ansprüche gelöst. Bevorzugte Ausführungsformen ergeben sich aus den Unteransprüchen.

Es wird ein System zur Übertragung von Daten zwischen einem, einen Berührungsbildschirm aufweisendes Gerät und einer Sende- und/oder Empfangsvorrichtung bereitgestellt, wobei der Berührungsbildschirm einen kapazitiven Bildschirm und die Vorrichtung mindestens eine Platte mit mindestens einer elektrisch leitfähigen Fläche aufweist, wobei die Platte mit dem Berührungsbildschirm wirkverbunden wird und die Flächen elektrisch aktiviert werden. Es war völlig überraschend, dass das erfindungsgemäße System nicht die Nachteile und Mängel des Standes der Technik aufweist und eine effiziente und besonders sichere Datenübertragung mit einem Berührungsbildschirm ermöglicht. Besonders überraschend war die Schnelligkeit, mit der die Daten übertragen werden. Hierdurch können Wartezeiten von Benutzern erheblich minimiert werden, was den Bedienkomfort erheblich verbessert. Die Datenübertragung kann vorteilhafterweise unidirektional oder bidirektional erfolgen. Die Sende- und/oder Empfangsvorrichtung kann Daten an einen Berührungsbildschirm bzw. an ein, einen Berührungsbildschirm aufweisendes Gerät senden und auch von diesem Daten empfangen. Unidirektional bedeutet im Sinne der Erfindung insbesondere, dass der Datenaustausch nur in eine Richtung stattfindet, also entweder von der Sende- und/oder Empfangsvorrichtung an den Berührungsbildschirm oder das Gerät oder umgekehrt. Dahingegen bezeichnet bidirektional im Sinne der Erfindung insbesondere, dass ein Datenaustausch vorzugsweise gleichzeitig oder nacheinander in beide Richtungen verläuft.

Daten bezeichnen im Sinne der Erfindung Gebilde aus Zeichen oder kontinuierliche Funktionen, die aufgrund bekannter oder unterstellter Abmachungen Informationen darstellen, vorrangig zum Zweck der Verarbeitung und als deren Ergebnis. Die Daten oder Informationen sind (maschinen-) lesbar und -bearbeitbar und sind zur Kommunikation, Interpretation oder zur Verarbeitung nutzbar. Dem Fachmann der Informatik ist bekannt, was mit dem Begriff "Daten" bezeichnet wird.

Im Stand der Technik sind Berührungsbildschirme auch als Touchscreens oder Flächensensoren beschrieben. Sie ermöglichen die Eingabe durch Berührung mit Fingern.

Wirkverbunden bezeichnet im Sinne der Erfindung insbesondere, dass die Sende- und/oder Empfangsvorrichtung mit dem Berührungsbildschirm derart verbunden oder verknüpft ist, dass Daten zwischen dem Berührungsbildschirm und der Sende- und/oder Empfangsvorrichtung ausgetauscht werden können. Beispiele für wirkverbundene Elemente sind beispielsweise die Glühbirne und der Lichtschalter, die über eine Wirkung oder Funktion miteinander verbunden sind. Wirkverbunden meint im einfachsten Sinne insbesondere, dass etwas miteinander mechanisch zumindest zeitweise verbunden ist. Weiterhin kann es - z.B. elektronisch - so verbunden sein, dass Energie und/oder Informationen übertragen werden (beispielsweise ohne dass eine mechanische Verbindung vorliegt), d.h. zwei Elemente sind so angeordnet oder (miteinander) verknüpft, dass der gewünschte Effekt realisiert wird.

Der Berührungsbildschirm oder zumindest ein Teilbereich dessen ist mit der Platte der Sende- und/oder Empfangsvorrichtung in Kontakt gebracht. Im Sinne der Erfindung bedeutet in Kontakt bringen, dass insbesondere zwischen der Platte und dem Berührungsbildschirm bevorzugt kein Freiraum besteht. Das heißt, die Platte ist bevorzugt mit dem Berührungsbildschirm in Berührungskontakt. Es kann jedoch auch bevorzugt sein, dass zwischen der Platte und dem Berührungsbildschirm kein direkter Kontakt besteht, sondern nur eine Annäherung vorliegt, welche ausreicht, um eine Datenübertragung auszulösen. Dies ist insbesondere der Fall, wenn Zwischenlagen und/oder Substrate den direkten Kontakt zwischen Platte und Berührungsbildschirm verhindern.

Die Platte kann als Aufnahmemittel zur Aufnahme mindestens der elektrisch leitfähigen Flächen dienen und kann jegliche Form (z. B. eckig, rund, rechteckig, quadratisch usw.) aufweisen. Das Material der Platte ist vorzugsweise ausgewählt aus der Gruppe umfassend Kunststoff, Papier, Karton, Holzwerkstoff, Folie, Verbundwerkstoff, Glas, Keramik, Leiterplattenmaterial, Textilien, Leder oder einer Kombination davon. Die Platte besteht insbesondere aus einem elektrisch nicht leitenden Stoff, der vorzugsweise starr ist. Es können lichtdurchlässige oder lichtundurchlässige Materialien verwendet werden.

Es kann beispielsweise bevorzugt sein, dass die Platte mit der insbesonders elektrisch leitfähigen Fläche von einer elektrisch nicht leitfähigen Schicht oder Decklage bedeckt ist, die die Platte oder allgemein die Sende- und/oder Empfangsvorrichtung vor Schmutz und Krafteinwirkungen schützt. Ferner kann die Schicht oder Decklage so ausgestaltet sein, dass sie die kratzempfindlichen Oberflächen der Berührungsbildschirme nicht beschädigt, sondern schützt. Die Decklage ist bevorzugt aus einem elektrisch nicht leitfähigen Material wie Papier, Kunststoff, Textil, Schaumstoff, Gummi und/oder dem gleichen Material wie die Platte gefertigt und kann mit einer Farb- und/oder Lackschicht oder einer Wachsschicht bedruckt oder beschichtet sein. Die Decklage kann vorteilhafterweise eine Kleberschicht, eine Papierschicht, eine Farbschicht, eine Lackschicht und/oder eine Folie sein. Es ist natürlich auch denkbar, Kombinationen der Vorgenannten aufzubringen.

Auf der Platte der Sende- und/oder Empfangsvorrichtung, die im Sinne der Erfindung als Elektrodenplatte bezeichnet werden kann, ist mindestens eine elektrisch leitfähige Fläche aufgebracht. Die Form der Fläche ist beliebig und kann in unterschiedlichen Ausführungen gestaltet sein. So können beispielsweise runde, eckige oder ovale Flächen oder Kombinationen davon auf der Platte vorliegen. Es können auch komplexe geometrische Formen realisiert werden oder mehrere einzelne Flächen miteinander kombiniert sein. Es kann bevorzugt sein, dass auf der Platte mehrere elektrisch leitfähige Flächen aufgebracht sind, wobei die Flächen bevorzugt einzeln, paarweise oder zu funktionalen Gruppen auf der Platte angeordnet sind. Vorteilhafterweise können Form, Orientierung, Anzahl, Ausrichtung, Abstand und/oder Position der Flächen variieren. Dem Fachmann sind mit einem gewissen Layout erzeugte Flächen auch als strukturierte Flächen bekannt. Die Strukturierung der Flächen erfolgt im jeweiligen Herstellungsverfahren.

Es kann auch bevorzugt sein, mehrere elektrisch leitfähige Flächen in Form eines oder mehrerer Arrays auf der Platte anzuordnen, sodass ein Array oder mehrere Arrays von miteinander nicht verbundenen elektrisch leitfähigen Flächen bereitgestellt wird. Im Sinne der Erfindung bezeichnet ein Array eine Anordnung von elektrisch leitfähigen Flächen auf einem elektrisch nicht leitfähigen Substrat (der Platte).

Es ist auch bevorzugt, dass die elektrisch leitfähigen Flächen einzeln, paarweise oder zu funktionellen Gruppen auf der Platte angeordnet sind. Im Sinne der Erfindung bezeichnen funktionelle Gruppen insbesondere eine Anordnung von Flächen, welche vorteilhafterweise dazu dienen, den Einfluss der Wechselwirkung mit dem Berührungsbildschirm bzw. dem den Berührungsbildschirm beinhaltenden Gerät gezielt zu verändern. Darunter zählt beispielsweise das Erzeugen, Schwingen, Hin- und Herwechseln, Verschieben, oder Fortschreiten von Wechselwirkungen welche überraschenderweise Touchevents auslösen. Diese wiederum machen überraschenderweise die Wechselwirkungen für den Berührungsbildschirm bzw. das den Berührungsbildschirm beinhaltende Gerät in Form von Daten und/oder Signalen auswertbar.

Die elektrisch leitfähigen Flächen können vorteilhafterweise mittels additiver Verfahren wie Druckverfahren, Stempelverfahren, PVD- und CVD- Verfahren, galvanischer Verfahren oder subtraktiver Verfahren wie Laserstrukturierung, Bürstverfahren, Fräsverfahren usw. aufgebracht werden. Auch können semi-additive Verfahren wie z.B. Ätzverfahren vorteilhaft sein. In einer Ausführungsform sind die elektrisch leitfähigen Flächen mittels eines Transferverfahrens auf die Platte aufgebracht. Hierbei ist insbesondere ein Folientransferverfahren, besonders ein Thermotransferverfahren bevorzugt. Dem Fachmann sind derartige Verfahren bekannt. Selbstverständlich können auch alle anderen Verfahren zur Aufbringung einer elektrisch leitfähigen Fläche verwendet werden.

Die elektrisch leitfähige Fläche wird bevorzugt strukturiert auf die Platte aufgebracht. Strukturiert bezeichnet im Sinne der Erfindung insbesondere, dass die elektrisch leitfähige Fläche die Platte nicht vollständig, sondern partiell bedeckt. Durch die Verknüpfung der elektrischen Leitfähigkeit mit der strukturierten Aufbringung, ist es überraschenderweise gelungen, eine gezielte Wechselwirkung der Platte mit einem Berührungsbildschirm zu erreichen.

Die elektrisch leitfähige Schicht ist bevorzugt eine Metallschicht, eine Metallpartikel enthaltende Schicht, eine elektrisch leitfähige Partikel enthaltende Schicht, elektrisch leitfähige Polymerschicht oder eine Schicht aus wenigstens einer Kombination dieser Schichten. Generell kann jedes Material verwendet werden, das elektrisch leitfähig ist. Des Weiteren können auch metallorganische Materialien, bestehend aus einer Verbindung aus Metall und Kohlenstoff, verwendet werden. Metalle bezeichnen im Sinne der Erfindung insbesondere chemische Elemente, die sich im Gegensatz zu den Nichtmetallen im Periodensystem links der diagonalen Trennungslinie, beginnend mit dem Element Beryllium (2. Gruppe) bis hin zum Polonium (16. Gruppe), befinden, sowie deren Legierungen und intermetallische Verbindungen (umfassend Laves-Phasen, Heusler-Phasen, Zintl-Phasen, Hume-Rothery-Phasen, NiTi, Co5, Nb3Sn oder Ni3Al) mit charakteristischen metallischen Eigenschaften. Metalle umfassen u. a. Aluminium, Blei, Chrom, Eisen, Gold, Indium, Cobalt, Kupfer, Magnesium, Mangan, Molybdän, Natrium, Nickel, Silber, Titan, Wolfram, Zink oder Zinn. Weiterhin können Metalloxide wie beispielsweise Indiumzinnoxid eingesetzt werden. Dies ist besonders vorteilhaft, weil es elektrisch leitfähig ist, aber auch transparent.

Polymere bezeichnen im Sinne der Erfindung insbesondere eine Substanz, die sich aus einem Kollektiv chemisch einheitlich aufgebauter, sich in der Regel aber hinsichtlich Polymerisationsgrad, Molmasse und Kettenlänge unterscheidender Makromoleküle (Polymermoleküle) zusammensetzt. Die Polymere sind vorzugsweise elektrisch leitfähig. Bei solchen polymereinheitlichen Stoffen sind alle Makromoleküle bevorzugt gleich aufgebaut und unterscheiden sich lediglich durch ihre Kettenlänge (Polymerisationsgrad). Man kann derartige Polymere als Polymerhomologe bezeichnen. Polymere können aus der Gruppe umfassend anorganische Polymere, metallorganische Polymere voll- oder teilaromatische Polymere, Homopolymere, Copolymere, Biopolymere, chemisch modifizierte Polymere und/oder synthetische Polymere ausgewählt werden. Besonders bevorzugt sind Polymere ausgewählt aus Paraphenylen, Polyacetylen, Polypyrrol, Polythiophen, Polyanilin (PANI) und PE-DOT.

Elektrisch leitfähige Substanzen sind weiterhin insbesondere Ruß- oder Graphitpartikel. Ruß beschreibt eine Erscheinungsform des Kohlenstoffs, die sich bei unvollständiger Verbrennung bzw. thermischer Spaltung von dampfförmigen kohlenstoffhaltigen Substanzen bildet. Ruß kann in pulverförmiger oder granulierter Form verwendet werden. Es können auch Ruß Präparationen, beispielsweise als flüssige, pastenförmige oder feste Ruß-Lösemittel-Konzentrate, in denen der Ruß gleichmäßig dispergiert ist, verwendet werden. Je nach Herstellungsweise und Rohstoff kann Ruß neben Kohlenstoff auch Wasserstoff, Stickstoff oder Sauerstoff enthalten. Ruß weist eine hervorragende Pigment-Eigenschaft, sowie eine Unlöslichkeit in allen Lösungsmitteln, Resistenz gegen die meisten Chemikalien, Lichtechtheit, hohe Farbtiefe u. Farbstärke auf. Graphit bezeichnet im Sinne der Erfindung insbesondere eine stabile Modifikation des Kohlenstoffs. Aufgrund seines schichtartigen Aufbaus ist Graphit ein guter Leiter.

Die elektrisch leitfähige Fläche stellt vorzugsweise die Schnittstelle zum Berührungsbildschirm dar und ist bevorzugt in räumlicher Nähe zu diesem angeordnet. Eine räumliche Nähe bezeichnet im Sinne der Erfindung insbesondere, dass ein direkter Kontakt oder indirekter Kontakt besteht und die elektrisch leitfähige Fläche in funktionaler Wechselwirkung zum Berührungsbildschirm steht. Diese Wechselwirkung kann durch verschiedene physikalische Wirkprinzipien oder Kombinationen derer erreicht werden, z. B. kapazitiv, induktiv, elektromagnetisch oder elektronisch. Die jeweilige Wechselwirkung hängt vom konkret vorliegenden Berührungsbildschirmtyp, d. h. von der Berührungsbildschirm-Technologie ab. Die Funktion der elektrisch leitfähigen Fläche ist vorzugsweise das Auslösen mindestens eines Berührungsereignisses auf dem Berührungsbildschirm. Ein Berührungsereignis oder auch Touchevent genannt, bezeichnet im Sinne der Erfindung insbesondere ein Auslösen eines Ereignisses auf dem Berührungsbildschirm. Hierdurch können beispielsweise Daten von der Sendevorrichtung auf den Berührungsbildschirm, bzw. auf das den Berührungsbildschirm aufweisende Gerät übertragen werden.

Es ist bevorzugt, dass die Sende- und Empfangsvorrichtung mindestens ein Sendemittel, ein Empfangsmittel und/oder eine Auswerteelektronik umfasst. Mittels des Sendemittels können Daten von der Sendevorrichtung an den Berührungsbildschirm über die elektrisch leitfähigen Flächen der Platte gesendet werden. Hierdurch ist eine sichere und schnelle Art der Datenübertragung möglich. Es war völlig überraschend, dass die Datenübertragung mit jeglichem Typ eines Berührungsbildschirms erfolgen kann, so dass eine universelle Einsetzbarkeit der Sende- und/oder Empfangsvorrichtung sichergestellt ist.

Bevorzugte Sende- und/oder Empfangsmittel umfassen Mittel der Kurzstrecken-Funktechnik (WPAN - Wireless Personal Area Network), ausgewählt aus der Gruppe umfassend Bluetooth, WLAN oder Infrarot. Bevorzugte Empfangsmittel umfassen vorzugsweise resistive Sensoren, induktive Sensoren, Differentialtransformatoren, induktive Wegaufnehmer, Wirbelstromsensoren, induktive Näherungsschalter, Magnetfeldsensoren, magnetoelastische Sensoren, kapazitive Sensoren, piezoelektrische Sensoren, optoelektronische Sensoren, oder elektrochemische Sensoren.

Die Sende- und/oder Emfangsmittel können an unterschiedlichen Stellen in der Sende-und/oder Empfangsvorrichtung integriert sein. Beispielsweise kann es bevorzugt sein, dass die Platte Öffnungen oder Aussparungen aufweist, in die Sende- und/oder Empfangsmittel, insbesondere Sensoren integriert sind. Durch die bevorzugte Lage der Sensoren kann eine schnelle und effiziente Datenübertragung zwischen Berührungsbildschirm und Sende-und/oder Empfangsvorrichtung hergestellt werden. Die Sende- und/oder Empfangsmittel können über eine eigene Energieversorgung verfügen oder an die Energieversorgung der Sende- und/oder Empfangsvorrichtung angebunden sein.

Im Stand der Technik sind Dünnfilmsensoren beschrieben, die eine geringe Dicke aufweisen und flexibel auf einen Untergrund aufbringbar sind. Solche Sende- und/oder Empfangsmittel, oder generell Sende- und/oder Empfangsmittel mit einer geringen Dicke können auch auf oder unter der Platte angeordnet sein, wodurch die Gesamtdicke der Sende- und/oder Empfangsvorrichtung erheblich reduziert werden kann.

Die Sende- und/oder Empfangsvorrichtung kann vorzugsweise über mehrere Sende-und/oder Empfangsmittel verfügen, die im Sinne der Erfindung auch als Kommunikationsmittel bezeichnet werden.

Es ist bevorzugt, das das System zur unidirektionalen oder bidirektionalen Datenübertragung zwischen einem, einen Berührungsbildschirm aufweisendes Gerät und einer Sende- und Empfangsvorrichtung verwendet wird, wobei eine kapazitive Kopplung zwischen der Vorrichtung und dem Berührungsbildschirm erfolgt und diese eine Dateneingabe auf dem, einen Berührungsbildschirm aufweisendes Gerät bewirkt. Mittels der Sende- und/oder Empfangsmittel können Daten von der Sende- und/oder Empfangsvorrichtung an den Berührungsbildschirm oder an das, den Berührungsbildschirm aufweisende Gerät gesendet, aber auch von diesem empfangen werden. Das heißt, in einer bevorzugten Ausführungsform ist ein bidirektionaler Datenaustausch zwischen dem Berührungsbildschirm, bzw. dem, den Berührungsbildschirm aufweisenden Gerät und der Sende- und/oder Empfangsvorrichtung möglich. Hierfür weist die Sende- und/oder Empfangsvorrichtung vorzugsweise eine Auswerteeinheit auf, die die von den Empfangsmitteln empfangenen Signale in verarbeitbare Daten umwandelt. Es ist bevorzugt, dass die von dem den Berührungsbildschirm aufweisende Gerät gesendeten Daten in Signale gewandelt werden, welche von den Sensoren der Vorrichtung empfangen und mittels der Auswerteelektronik in Daten zurückgewandelt werden. Im Sinne der Erfindung bezeichnet eine Auswerteeinheit elektrische und elektronische Mittel, die in der Sende- und/oder Empfangsvorrichtung vorliegen und der Interpretation und Verarbeitung der empfangenen Signale dienen.

In einer bevorzugten Ausführungsform umfasst die Sende- und/oder Empfangsvorrichtung mindestens:
a. eine elektrische Leiterbahn,
b. eine elektrisch leitfähige Fläche,
c. eine Kontrolleinheit zur elektrischen Verschaltung der elektrisch leitfähigen Fläche und
d. eine interne oder externe Energieversorgung, wobei
die elektrisch leitfähige Fläche über mindestens eine Leiterbahn mit der Kontrolleinheit elektrisch verbunden ist.

Die elektrisch leitfähigen Flächen sind vorzugsweise strukturiert auf der Platte angeordnet und über mindestens eine Leiterbahn mit der Kontrolleinheit verbunden, die der elektrischen Verschaltung der Flächen dient. Hierdurch können beim Senden von Daten an einen Berührungsbildschirm die Flächen elektrisch von der Kontrolleinheit angesteuert werden und ein Touchevent auf dem Berührungsbildschirm auslösen. Das den Berührungsbildschirm aufweisende Gerät kann die Touchevents mittels einer Auswerteeinheit in Daten umwandeln. Die Kontrolleinheit bezieht ihre elektrische Energie vorzugsweise von einer Energieversorgung, die internen oder externen Ursprungs sein kann. Die Energieversorgung kann beispielsweise eine Batterie, ein Akkumulator, eine Solarzelle, ein Piezo-Element, ein Kondensator oder eine Kombination hiervon sein. Die Energieversorgung ist mit der Kontrolleinheit elektrisch verbunden und versorgt diese mit Energie. Es kann auch bevorzugt sein, dass die Energieversorgung durch einen externen Netzanschluss wiederaufladbar, austauschbar oder auswechselbar ist. Hierfür verfügt die Energieversorgung über entsprechende Verbindungsanschlüsse. Die Sende- und/oder Empfangsvorrichtung kann jedoch auch Energie von einer externen Energieversorgung beziehen, sodass die Vorrichtung vorzugsweise lediglich entsprechende Anschlüsse aufweist, um mit der entsprechenden Energieversorgung verbunden zu werden.

Vorteilhafterweise kann die Energieversorgung als Solarzelle ausgestaltet sein, die durch eine Lichtquelle aufladbar ist. Hierfür können künstliche oder natürliche Lichtquellen herangezogen werden. Es kann auch bevorzugt sein, eine "energy harvesting"-Methode zu nutzen, um die Sende- und/oder Empfangsvorrichtung mit Energie zu versorgen. Beispielsweise könnte die Energie von dem Berührungsbildschirm bereitgestellt werden, der mit der Vorrichtung in Kontakt steht. Auch kann die Vorrichtung vorteilhafterweise mittels Induktion (z. B. einer Induktionsspule) mit Energie versorgt werden.

Die elektrisch leitfähigen Flächen haben eine Ableitung in Form von Leiterzügen oder Leiterbahnen zu der Kontrolleinheit. Das heißt, alle Ableitungen werden vorzugsweise in einer Kontrolleinheit (z.B. einem Controllerchip) oder mehreren Kontrolleinheiten zusammengeführt. Die Flächen sind somit lediglich über die Kontrolleinheit elektrisch miteinander verbunden, wobei keine direkte elektrische Verbindung zwischen den Flächen (außer über die Kontrolleinheit) besteht. Leiterbahnen bestehen bevorzugt aus einem elektrisch leitfähigen Material und stellen bevorzugt eine elektrische Verbindung her.

Die Kontrolleinheit der Sende- und/oder Empfangsvorrichtung umfasst vorzugsweise mindestens eine digitale und/oder analoge Schaltung. Eine digitale Schaltung ist vorzugsweise ein Mikrocontroller, kann aber auch ein ASIC, ein FPGA oder eine diskrete digitale Schaltung aus Logikgattern, Halbleiterbauelementen, elektromechanischen oder mechanischen Bauelementen oder eine Kombination davon sein. Die digitale Schaltung dient der Generierung der zu übertragenden Daten/Codes und der Umwandlung derer in digitale oder analoge Signale, die entweder direkt oder über die analoge Schaltung über die elektrisch leitfähigen Verbindungen an die elektrisch leitfähigen Flächen, die im Sinne der Erfindung auch als Elektroden bezeichnet werden können, weitergeleitet werden. Eine analoge Schaltung dient der Signalformung und kann beispielsweise einen Hochpass, einen Tiefpass, ein Glied zur Gleichspannungsentkopplung, eine Arbeitspunkteinstellung (Vorspannung) oder eine Ladungspumpe enthalten. Für jede der elektrisch leitfähigen Verbindungen zu jeweils einer der elektrisch leitfähigen Flächen existieren vorzugsweise gleichartige analoge Schaltungen, es können jedoch auch unterschiedliche Auslegungen der analogen Schaltung für die einzelnen Verbindungen zu den elektrisch leitfähigen Flächen existieren. Bevorzugt ist auch, auf der Kontrolleinheit eine mechanische Anordnung anzubringen, welche selbst durch eine höhere Instanz, wie beispielsweise einem Benutzer gesteuert wird und elektrische Brücken zwischen den Leiterzügen öffnet und schließt (Relaisbauweise).

Es kann vorteilhaft sein, wenn die Digitalschaltung der Kontrolleinheit eine elektronische, elektromechanische, mechanische Schaltung oder eine Kombination derer ist.

Die Erfindung betrifft mithin auch die Verwendung des Systems zur unidirektionalen oder bidirektionalen Datenübertragung zwischen einem einen Berührungsbildschirm aufweisenden Gerätes und einer Sende- und/oder Empfangsvorrichtung, wobei eine kapazitive Einkopplung zwischen der Vorrichtung und dem Berührungsbildschirm erfolgt und diese eine Dateneingabe auf dem den Berührungsbildschirm aufweisenden Gerät bewirkt. Das System ermöglicht eine schnelle und sichere Datenübertragung zwischen einer Sende-und/oder Empfangsvorrichtung und einem Berührungsbildschirm. Hierdurch können zum einen Daten von dem Berührungsbildschirm zu der Empfangsvorrichtung und Daten von der Sendevorrichtung zu dem Berührungsbildschirm gesendet werden. Das System kann somit vielfältig eingesetzt werden, bevorzugt kann es zur Autorisierung und/oder Authentifizierung verwendet werden.

Es war völlig überraschend, dass das System bevorzugt für Anwendungen in zahlreichen Bereichen verwendet werden kann. Diese umfassen beispielsweise Spielkarten, Sammelkarten, Briefmarken, Frankierung, Porto, Warenlogistik, Warenverfolgung, digitale Ordnungssysteme, Katalogisierung, digitalem Karteikartensystem, Einlass, Eintrittskarten, Zugang zu geschlossen Bereichen, virtuellen Inhalten, Marketinganwendungen, Kundenbindung, Lotterie- und Gewinnspiele, Mitgliederausweise, Zeitkarten, Bezahlanwendungen, Echtheits-Zertifikate, Zertifikate, Fälschungssicherungen, Kopierschutze, Signaturen, Lieferscheine, Kontoauszüge, Beipackzettel, Gegenstände innerhalb von Computerspielen, Music/Video/E-Books-Downloads, Bonusmarken/- programme, Gerätesteuerungen oder Geschenkkarten, ohne darauf begrenzt zu sein.

In einer besonderen Ausführungsform kann das System auch als Speichervorrichtung derart verwendet werden, dass vom Berührungsbildschirm beinhaltenden Gerät Daten an die Vorrichtung gesendet werden, die in der Vorrichtung flüchtig oder nichtflüchtig gespeichert werden. Somit kann es bevorzugt sein, dass die Sende- und/oder Empfangsvorrichtung Mittel zur Speicherung von Daten aufweist. Das, den Berührungsbildschirm beinhaltende Gerät kann auch vorteilhafterweise Daten von der Vorrichtung abrufen, indem es Daten an die Vorrichtung sendet, die wiederum die Kontrolleinheit veranlassen in der Vorrichtung gespeicherte Daten an das, den Berührungsbildschirm beinhaltende Gerät zu senden.

Um eine einfache und schnelle Interaktion zwischen Berührungsbildschirm und der Sende-und/oder Empfangsvorrichtung herzustellen, kann es vorteilhaft sein, wenn die Platte der Sende- und/oder Empfangsvorrichtung, die Decklage oder die Sende- und /oder Empfangsvorrichtung selbst über visuelle, akustische, taktile, haptische oder mechanische Positionierungsmittel verfügt, um eine optimale Positionierung des Berührungsbildschirms oder des, den Berührungsbildschirm aufweisenden Gerätes an oder auf der Sende- und/oder Empfangsvorrichtung zu garantieren. Beispielsweise kann die Sende- und/oder Empfangsvorrichtung über eine Anschlagkante verfügen, die der Positionierung des Berührungsbildschirms dient. Die korrekte oder falsche Positionierung kann dem Benutzer einfach durch visuelle, akustische, taktile oder haptische Mittel vermittelt werden.

In einer bevorzugten Ausführungsform ist in die Sende- und/oder Empfangsvorrichtung und/oder in ein, die Vorrichtung beinhaltendes Gerät ein Ein- und/oder Ausgabesystem integriert. Dieses ist ausgewählt aus der Gruppe umfassend Tastatur, Maus, Joystick, Grafiktablett, Digitalstift, Gamepad, Scanner, Kameras, MIDI-Keyboards, Drucker und Display. Die Eingabesysteme können die Bedienung der Sende- und/oder Empfangsvorrichtung vereinfachen. Um die Ein- und/oder Ausgabesysteme mit der Sende-und/oder Empfangsvorrichtung zu verbinden, kann diese über die im Stand der Technik beschriebenen Anschlüsse verfügen, sodass eine Verbindung schnell und einfach hergestellt werden kann. Mittels der Ausgabesysteme kann der Datenaustausch zwischen dem Berührungsbildschirm und der Sende- und/oder Empfangsvorrichtung beobachtet, bzw. dokumentiert werden. Beispielsweise kann auf einem Display, das mit der Vorrichtung verbunden ist, der Fortschritt des Datenaustauschs angezeigt werden. Das Display kann in einer bevorzugten Ausführungsform in ein Gehäuse der Sende- und/oder Empfangsvorrichtung integriert sein. Das Display kann auch als Touchscreen ausgeführt sein, sodass dieses als Ein- und Ausgabesystem fungieren kann.

In einer bevorzugten Ausführungsform kann das System über Mittel zur Kommunikation mit anderen Datenübertragungseinrichtungen und/oder Datenverarbeitungssystemen verfügen. Ein Datenverarbeitungssystem wird im Sinne der Erfindung insbesondere als elektronisches datenverarbeitendes System bezeichnet und umfasst bevorzugt Computer, Großrechner, Serversysteme, Datenbanksysteme, Informationssysteme, Prozessrechner, Digitale Messsysteme, DSP-Systeme, Microcontrollersysteme, Kompaktregler, eingebettete Systeme, Mobiltelefone, Smartphones, Tablets, digitale Anrufbeantworter, Videokonferenzsysteme und Kommunikationssysteme. Die Mittel zur Kommunikation ermöglichen eine Datenübertragung der Sende- und/oder Empfangsvorrichtung mit dem den Berührungsbildschirm aufweisenden Gerät aber auch mit anderen Datenübertragungseinrichtungen und/oder Datenverarbeitungssystemen, wobei die Verbindung insbesondere durch kabellose oder Kabelverbindungen, Funk oder Licht hergestellt wird. Es kann jedoch auch bevorzugt sein, dass die Vorrichtung selbst ein Datenverarbeitungssystem darstellt und/oder mit einem Datenverarbeitungssystem verbunden ist.

Mit dem System ist überraschenderweise eine drahtlose Kommunikation/Datenübertragung zwischen einem mobilen, einen Berührungsbildschirm aufweisenden Gerät und einer Sende-und/oder Empfangsvorrichtung möglich. Demgemäß betrifft die Erfindung auch ein Verfahren zur Datenübertragung zwischen einem, einen kapazitiven Berührungsbildschirm aufweisenden Gerät und einer Sende- und/oder Empfangsvorrichtung, wobei die Vorrichtung mindestens eine Platte mit mindestens einer leitfähigen Fläche aufweist, umfassend folgende Schritte:
a. in Nähe bringen des Berührungsbildschirms zu der die leitfähige Fläche aufweisenden Platte und
b. Senden von elektrischen Signalen von der Vorrichtung an den Berührungsbildschirm, nämlich Ansteuerung des kapazitiven Berührungsbildschirms, insbesondere von Elektroden des Berührungsbildschirms durch eine kapazitive Kopplung mit den leitfähigen Flächen der Platte, und
c. Auslösen von Touchevents auf dem Berührungsbildschirm.

Durch das Verfahren ist es vorteilhafterweise möglich, Daten zwischen einem Berührungsbildschirm, bzw. einem, einen Berührungsbildschirm aufweisendes Gerät und der Sende- und/oder Empfangsvorrichtung zu übertragen, wobei der Datenaustausch unidirektional oder bidirektional erfolgen kann. Die Touchevents werden bevorzugt einer Aktion eines Datenverarbeitungssystems zugeordnet oder lösen diese aus. Diese Aktion trifft insbesondere auf nicht vernetzte Datenverarbeitungssysteme und besonders bevorzugt auf vernetzte Datenverarbeitungssysteme zu.

Im Nachfolgenden soll die Erfindung anhand von Figuren beispielhaft erläutert werden, ohne jedoch auf diese beschränkt zu sein. Es zeigen:
- Fig. 1: Ein bevorzugtes System
- Fig. 2A, B: Wechselwirkung zwischen einem Gerät und der Vorrichtung
- Fig. 3: Schnittdarstellung einer Platte
- Fig. 4: Sende- und Empfangsvorrichtung mit mehreren in der Vorrichtung verteilten Sensoren
- Fig. 5: System mit mehreren auf der Platte angeordneten leitfähigen Flächen
- Fig. 6A, B: Uni- und bidirektionaler Datenaustausch
- Fig. 7: Bevorzugte Sende- und/oder Empfangsvorrichtung mit einer Decklage
- Fig. 8: Bevorzugter Datenaustausch
- Fig. 9: Bevorzugter Ablauf eines Datenaustauschs

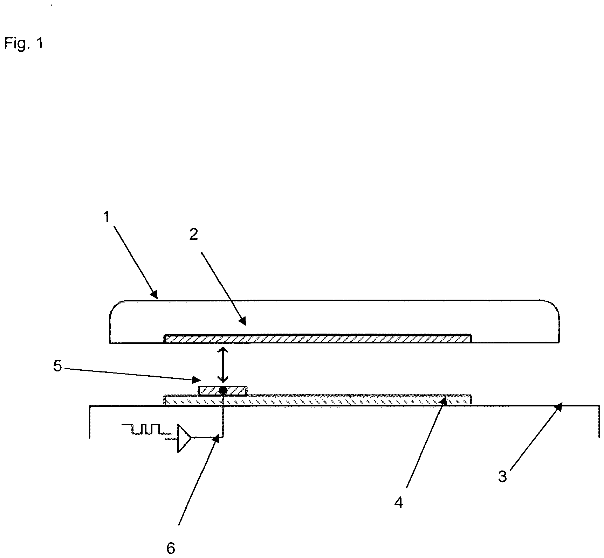

Die Fig. 1 zeigt ein bevorzugtes System. Das System umfasst ein, einen Berührungsbildschirm 2 aufweisendes Gerät 1 und eine Sende- und/oder Empfangsvorrichtung 3 mit einer, mindestens eine elektrisch leitfähige Fläche 5 aufweisenden Platte 4. Die elektrisch leitfähige Fläche 5 ist vorzugsweise strukturiert, d. h. bereichsweise auf der Platte 4 aufgebracht, sodass die Fläche 5 die Platte 4 nicht vollständig bedeckt. Die Fläche 5 ist vorzugsweise mit einer elektrischen Verschaltung 6 mit einer Kontrolleinheit (nicht dargestellt) verbunden. Die Platte 4 ist vorzugsweise mit dem Berührungsbildschirm 2 wirkverbunden, sodass eine kapazitive Kopplung zwischen den elektrisch aktivierten Flächen 5 und dem Berührungsbildschirm 2 stattfindet, wobei zwischen dem Berührungsbildschirm 2 und der Sende- und/oder Empfangsvorrichtung 3, insbesondere der elektrisch leitfähigen Fläche 5 ein Datenaustausch erfolgt (angezeigt durch den beidseitigen Pfeil).

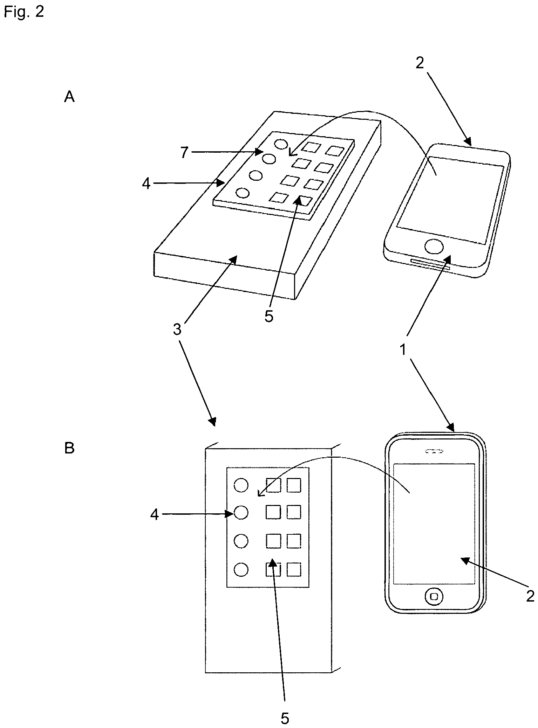

Fig. 2A und Fig. 2B stellen eine bevorzugte Wechselwirkung zwischen einem Gerät 1 und der Vorrichtung dar. Die Sende- und/oder Empfangsvorrichtung 3 kann in jeglicher Orientierung mit dem Gerät 1, bzw. dem Berührungsbildschirm 2 wechselwirken. Um die Positionierung des Berührungsbildschirms 2 auf der Sende- und/oder Empfangsvorrichtung 3 zu vereinfachen, kann diese Positionierungsmittel aufweisen, mit deren Hilfe das Gerät 1 lediglich in einer definierten Orientierung an oder auf die Sende- und/oder Empfangsvorrichtung 3 gebracht werden kann. Für die Wechselwirkung wird lediglich der Berührungsbildschirm 2 in Nähe oder in Kontakt mit der Vorrichtung 3, bzw. der Platte 4 mit den elektrisch leitfähigen Flächen 5 gebracht. Der Datenaustausch zwischen dem Berührungsbildschirm 2 und der Sende- und/oder Empfangsvorrichtung 3 kann in unidirektionaler oder bidirektionaler Richtung erfolgen. Die Sende- und/oder Empfangsvorrichtung 3 kann Öffnungen 7 oder Aussparungen aufweisen, in die Sende-und/oder Empfangsmittel 8 (nicht dargestellt) verbaut sind.

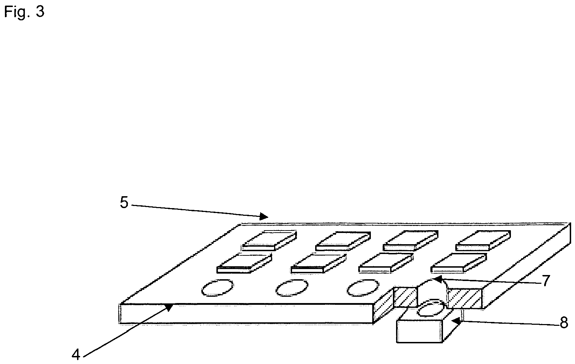

Fig. 3 zeigt eine Schnittdarstellung einer Platte 4. Die Platte 4 weist vorzugsweise elektrisch leitfähige Flächen 5 und Öffnungen 7 auf. Die Flächen 5 sind strukturiert, d. h. bereichsweise auf der Platte 4 angeordnet. In die Platte 4 sind Öffnungen 7 integriert, in die Sende-und/oder Empfangsmittel 8 eingebracht sind. Es kann jedoch auch vorteilhaft sein, dass die Platte 4 lediglich Vertiefungen aufweist, in die die Sende- und/oder Empfangsmittel 8 eingefügt sind. Mittels der Sende- und/oder Empfangsmittel 8, die beispielsweise optoelektrische Sensoren sein können, können Signale von dem Berührungsbildschirm 2 an die Sende- und/oder Empfangsvorrichtung 3 gesendet werden. Die Signale können beispielsweise optische, akustische oder sonstige Signale sein.

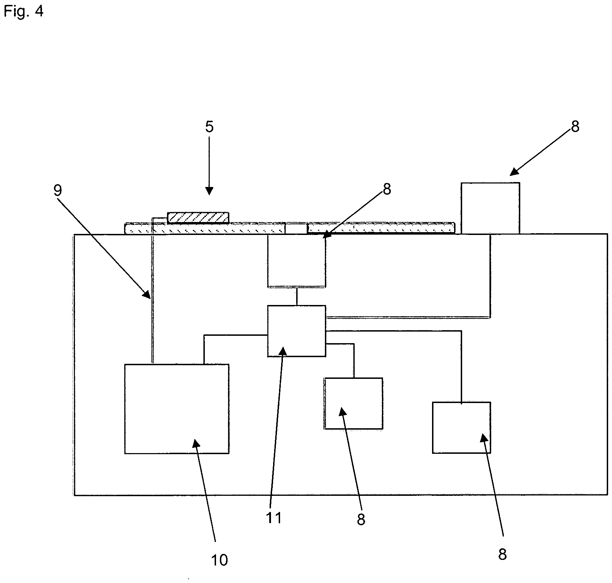

Fig. 4 stellt eine beispielhafte Variante der Sende- und Empfangsvorrichtung 3 dar, die über mehrere Empfangsmittel 8 verfügt. Die Kontrolleinheit 10 ist dabei über die Leiterbahn 9 mit der elektrisch leitfähigen Fläche 5 verbunden, die eine Wirkverbindung mit dem Berührungsbildschirm 2 (hier nicht dargestellt) eingeht. Weiterhin kann das System über die anderen Empfangsmittel 8 Signale von dem, den Berührungsbildschirm aufweisenden Gerät 1 empfangen. Die Empfangsmittel 8 sind hier zur Verarbeitung der empfangenen Signale mit der Auswerteeinheit 11 verbunden. Die empfangenen Signale werden durch die Auswerteeinheit 11 weiterverarbeitet, um daraus Nutzdaten zu gewinnen, die schließlich an die Kontrolleinheit 10 weitergeleitet werden. Ein System in der dargestellten Konfiguration kann neben den dargestellten weiteren Empfangsmitteln 8 auch über weitere Sendemittel 8 verfügen um mit dem den Berührungsbildschirm aufweisende Gerät 1 zu kommunizieren. Die Sende- und/oder Empfangsmittel 8 können an unterschiedlichen Stellen in der Sende-und/oder Empfangsvorrichtung 3 integriert sein. Bevorzugte Sende- und/oder Empfangsmittel 8 umfassen Mittel der Kurzstrecken-Funktechnik (WPAN - Wireless Personal Area Network), ausgewählt aus der Gruppe umfassend Bluetooth, WLAN oder Infrarot. Es sind weiterhin auch resistive Sensoren, induktive Sensoren, Differentialtransformatoren, induktive Wegaufnehmer, Wirbelstromsensoren, induktive Näherungsschalter, Magnetfeldsensoren, magnetoelastische Sensoren, kapazitive Sensoren, piezoelektrische Sensoren, optoelektronische Sensoren, oder elektrochemische Sensoren als Empfangmittel bevorzugt.

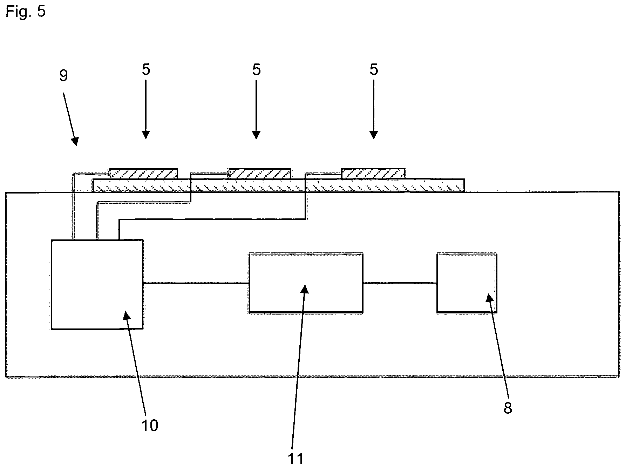

Fig. 5 zeigt einen bevorzugten Aufbau des Systems, bestehend aus einer Kontrolleinheit 10, die mehrere leitfähige Flächen 5 über jeweils eine Leiterbahn 9 ansteuert. Damit besteht die Möglichkeit, mehrere Wirkverbindungen mit dem Berührungsbildschirm 2 (hier nicht dargestellt) herzustellen, wodurch zum Beispiel eine parallele Übertragung von mehreren Signalen zum Berührungsbildschirm 2 zum Zweck einer höheren Datenübertragungsgeschwindigkeit erfolgt. Weiterhin ist ein Empfangsmittel 8 dargestellt, welches mit der Auswerteeinheit 11 verbunden ist. Ein System in dieser beispielhaften Konfiguration ist in der Lage bidirektional mit einem, einen Berührungsbildschirm beinhaltendes Gerät 1 zu kommunizieren.

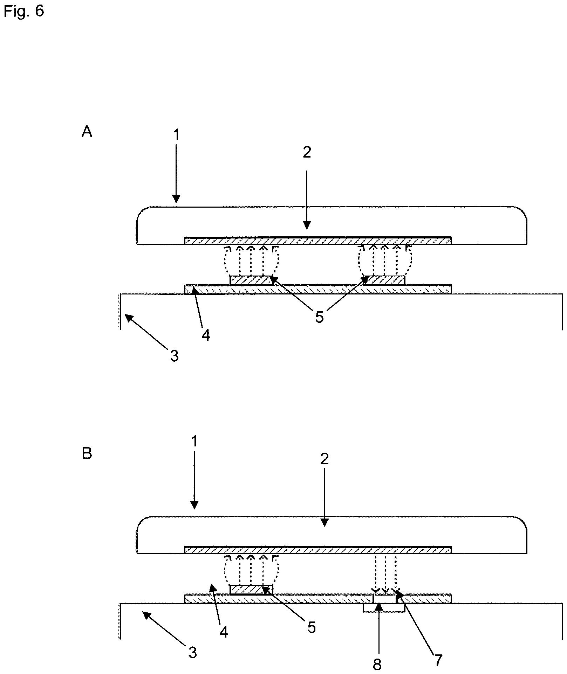

Fig. 6A und Fig. 6B zeigt einen uni- und bidirektionalen Datenaustausch. Der Datenaustausch ist mit den gestrichelten Pfeilen gekennzeichnet. Sobald der Berührungsbildschirm 2, bzw. das, den Berührungsbildschirm aufweisende Gerät 1 mit der Sende- und/oder Empfangsvorrichtung 3 in Wirkkontakt steht, findet ein Datenaustausch zwischen dem Berührungsbildschirm 2 und den elektrisch leitfähigen Flächen 5 auf der Platte 4 der Sende- und/oder Empfangsvorrichtung 3 statt. Hierbei werden vorzugsweise Daten von den Flächen 5 an den Berührungsbildschirm 2 gesendet, wo entsprechend Touchevents ausgelöst werden, wobei eine Auswerteeinheit 11 des Gerätes 1 die empfangenen Signale in Daten umwandelt. Es kann weiterhin vorteilhaft sein, dass Daten von dem Berührungsbildschirm 2 an die Sende- und/oder Empfangsvorrichtung 3 übermittelt werden. Hierfür können vorzugsweise Sende- und/oder Empfangsmittel 8 in Öffnungen 7 integriert sein, die von dem Berührungsbildschirm 2 gesendete Signale empfangen und an eine Auswerteeinheit 11 (nicht gezeigt) weiterleiten, die die Signale in Daten umwandelt.

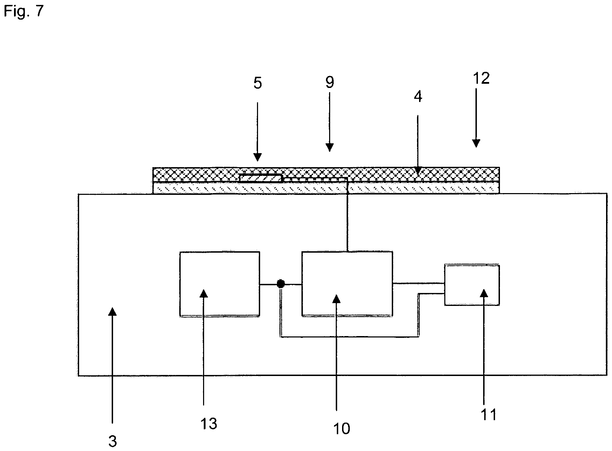

In Fig. 7 ist eine bevorzugte Sende- und/oder Empfangsvorrichtung 3 mit einer Decklage 12 dargestellt. Die Sende- und/oder Empangsvorrichtung 3 weist eine Platte 4 auf, auf der mindestens eine elektrisch leitfähige Fläche 5 vorliegt. Auf die Platte 4 mit der Fläche 5 kann eine weitere Schicht in Form einer Decklage 12 aufgebracht sein. Die Decklage 12 schützt die Platte 4 und die Fläche 5 vor Schmutz und äußeren Krafteinwirkungen. Die Fläche 5 kann über eine Leiterbahn 9 mit einer Kontrolleinheit 10 verbunden sein, die bevorzugt die elektrische Verschaltung der Fläche 5 steuert. Die Kontrolleinheit 10 ist vorzugsweise mit einer Auswerteeinheit 11 oder Auswerteelektronik verbunden, die Daten in elektrische Signale umwandelt. Die Auswerteeinheit 11 und die Kontrolleinheit 10 sind mit einer Energieversorgung 13 verbunden. Hierbei kann es sich um eine interne oder externe Energieversorgung 13 handeln.

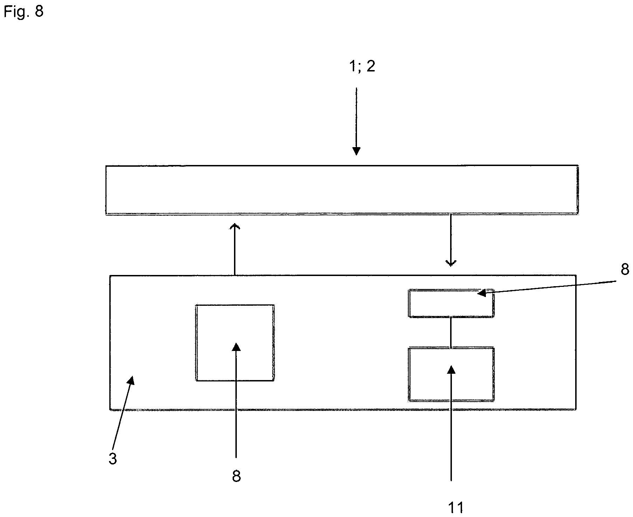

Fig. 8 zeigt einen bevorzugten Datenaustausch. Zwischen dem Berührungsbildschirm 2 bzw. dem Berührungsbildschirm beinhaltenden Gerät 1 und der Sende- und/oder Empfangsvorrichtung 3 kann ein unidirektionaler oder bidirektionaler Datenaustausch erfolgen. Hierfür verfügt die Sende- und/oder Empfangsvorrichtung 3 neben den elektrisch leitfähigen Flächen 5 (im Bild nicht dargestellt) über ein im Bild links dargestelltes Sendemittel 8, welches Signale an den Berührungsbildschirm 2 sendet und ein rechts im Bild dargestelltes Empfangsmittel 8, welches die Signale von dem Berührungsbildschirm 2 empfangen kann. Die Signale können beispielsweise durch Empfangsmittel 8 in Form von Sensoren empfangen werden, die unter der Platte 4 angeordnet sind. Die Sensoren sind mit einer Auswerteeinheit 11 verbunden, die die von dem Berührungsbildschirm 2 empfangenen Signale in Daten umwandelt.

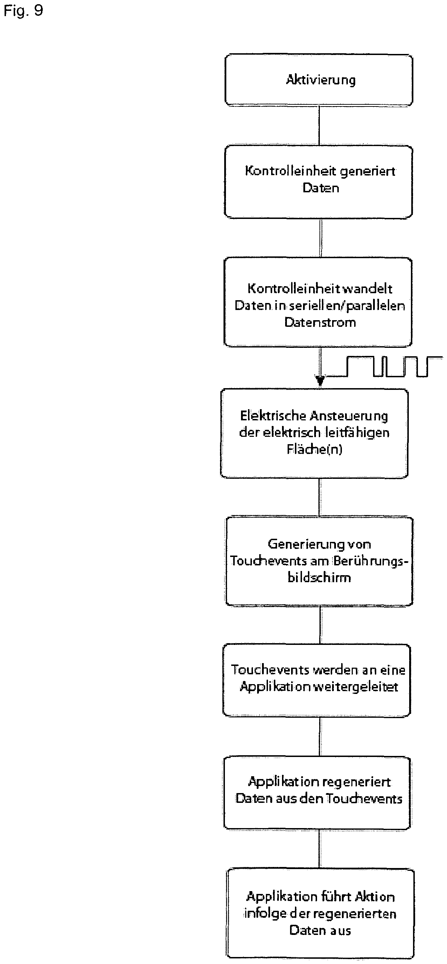

Fig. 9 zeigt einen bevorzugten Ablauf eines Datenaustauschs. Wenn ein Berührungsbildschirm mit einer Sende- und/oder Empfangsvorrichtung in Kontakt gebracht vorliegt, kann ein Datenaustausch zwischen dem Berührungsbildschirm und der Vorrichtung erfolgen. Hierfür wird die Sende- und/oder Empfangsvorrichtung aktiviert, wobei die Kontrolleinheit Daten generiert oder Daten von einem Datenverarbeitungssystem empfängt. Die Daten werden in einen seriellen/parallelen Datenstrom umgewandelt, so dass die elektrisch leitfähigen Flächen elektrisch angesteuert und die Daten an den Berührungsbildschirm gesendet werden können. Die elektrisch aktivierten Flächen generieren Touchevents auf dem Bildschirm, die wiederum von einer Auswerteeinheit ausgewertet werden oder an eine entsprechende Aplikation weitergeleitet werden, wo aus den Touchevents Daten generiert werden. Durch die Daten kann beispielsweise die Applikation eine Aktion ausführen.

### Bezugszeichenliste

- 1: Berührungsbildschirm aufweisendes Gerät
- 2: Berührungsbildschirm
- 3: Sende- und/oder Empfangsvorrichtung
- 4: Platte
- 5: elektrisch leitfähige Fläche
- 6: elektrische Verschaltung
- 7: Öffnung
- 8: Sende- und/oder Empfangsmittel
- 9: Leiterbahn
- 10: Kontrolleinheit
- 11: Auswerteeinheit
- 12: Decklage
- 13: Energieversorgung

## Patentansprüche

1. System zur Übertragung von Daten zwischen einem, einen Berührungsbildschirm aufweisenden Gerät und einer Sende- und/oder Empfangsvorrichtung, wobei der Berührungsbildschirm einen kapazitiven Bildschirm und die Vorrichtung mindestens eine Platte mit mindestens einer elektrisch leitfähigen Fläche aufweist,
**dadurch gekennzeichnet, dass**
die Platte mit dem Berührungsbildschirm wirkverbunden wird und die Flächen elektrisch aktiviert werden.

2. System nach Anspruch 1,
**dadurch gekennzeichnet, dass**
die Sende- und Empfangsvorrichtung mindestens ein Sendemittel, Empfangsmittel und/oder eine Auswerteeinheit umfasst.

3. System nach Anspruch 1 oder 2,
**dadurch gekennzeichnet, dass**
die Platte mit der Fläche von einer elektrisch nicht leitfähigen Schicht bedeckt ist.

4. System nach einem oder mehreren der vorherigen Ansprüche,
**dadurch gekennzeichnet, dass**
die Vorrichtung mindestens:
a. eine elektrische Leiterbahn,
b. eine elektrisch leitfähige Fläche,
c. eine Kontrolleinheit zur elektrischen Verschaltung der elektrisch leitfähige Fläche
und
d. eine interne oder externe Energieversorgung,
wobei die elektrisch leitfähige Fläche über mindestens eine Leiterbahn mit der Kontrolleinheit elektrisch verbunden ist.

5. System nach einem oder mehreren der vorherigen Ansprüche,
**dadurch gekennzeichnet, dass**
die Kontrolleinheit mindestens eine digitale und/oder analoge Schaltung umfasst.

6. System nach einem oder mehreren der vorherigen Ansprüche,
**dadurch gekennzeichnet, dass**
die Digitalschaltung der Kontrolleinheit eine elektronische, elektromechanische, mechanische Schaltung oder eine Kombination derer ist.

7. System nach einem oder mehreren der vorherigen Ansprüche,
**dadurch gekennzeichnet, dass**
die elektrisch leitfähigen Flächen einzeln, paarweise oder zu funktionalen Gruppen auf der Platte angeordnet sind.

8. System nach einem oder mehreren der vorherigen Ansprüche,
**dadurch gekennzeichnet, dass**
die Platte Öffnungen aufweist, in die Sensoren integriert sind.

9. System nach einem oder mehreren der vorherigen Ansprüche,
**dadurch gekennzeichnet, dass**
vom Berührungsbildschirm aufweisenden Gerät gesendete Daten in Signale gewandelt werden, welche von den Sensoren der Vorrichtung empfangen und mittels der Auswerteeinheit in Daten zurückgewandelt werden.

10. System nach einem oder mehreren der vorherigen Ansprüche,
**dadurch gekennzeichnet, dass**
die Datenübertragung unidirektional oder bidirektional ist.

11. System nach einem oder mehreren der vorherigen Ansprüche,
**dadurch gekennzeichnet, dass**
in die Vorrichtung und/oder in ein die Vorrichtung beinhaltendes Gerät ein Ein-und/oder Ausgabesystem integriert ist.

12. System nach einem oder mehreren der vorherigen Ansprüche,
**dadurch gekennzeichnet, dass**
dass das System über Mittel zur Kommunikation mit anderen Datenübertragungseinrichtungen und/oder Datenverarbeitungssystemen verfügt.

13. System nach einem oder mehreren der vorherigen Ansprüche,
**dadurch gekennzeichnet, dass**
die Vorrichtung selbst ein Datenverarbeitungssystem darstellt und/oder mit einem Datenverarbeitungssystem verbunden ist.

14. Verfahren zur Datenübertragung umfassend ein System nach den Ansprüchen 1 bis 13, wobei die Vorrichtung mindestens eine Platte mit mindestens einer elektrisch leitfähigen Fläche aufweist, umfassend folgende Schritte:
a. in Nähe bringen des Berührungsbildschirms zu der die leitfähige Fläche aufweisenden Platte und
b. Senden von elektrischen Signalen von der Vorrichtung an den Berührungsbildschirm, nämlich Ansteuerung des kapazitiven Berührungsbildschirms, insbesondere von Elektroden des Berührungsbildschirms durch eine kapazitive Kopplung mit den leitfähigen Flächen der Platte und
c. Auslösen von Touchevents auf dem Berührungsbildschirm.

15. Verwendung des Systems nach den Ansprüchen 1 bis 13 zur unidirektionalen oder bidirektionalen Datenübertragung zwischen einem, einen Berührungsbildschirm aufweisendes Gerät und einer Sende- und Empfangsvorrichtung, wobei eine kapazitive Kopplung zwischen der Vorrichtung und dem Berührungsbildschirm erfolgt und diese eine Dateneingabe auf dem, einen Berührungsbildschirm aufweisendes Gerät bewirkt.

16. Verwendung nach Anspruch 15, wobei das System zur Autorisierung und/oder Authentifizierung verwendet wird.

17. Verwendung nach einem oder mehreren der vorherigen Ansprüche für Anwendungen ausgewählt aus der Gruppe umfassend Spielkarten, Sammelkarten, Briefmarken, Frankierung, Porto, Warenlogistik, Warenverfolgung, digitale Ordnungssysteme, Katalogisierung, digitalem Karteikartensystem, Einlass, Eintrittskarten, Zugang zu geschlossen Bereichen, virtuellen Inhalten, Marketinganwendungen, Kundenbindung, Lotterie- und Gewinnspiele, Mitgliederausweise, Zeitkarten, Bezahlanwendungen, Echtheits-Zertifikate, Zertifikate, Fälschungssicherungen, Kopierschutze, Signaturen, Lieferscheine, Kontoauszüge, Beipackzettel, Gegenstände innerhalb von Computerspielen, Music/Video/E-Books-Downloads, Bonusmarken/-programme, Gerätesteuerungen oder Geschenkkarten.
